# EUROPEAN PATENT APPLICATION

(11) **EP 4 365 787 A1**
(43) Date of publication of application: **08.05.2024**
(21) Application number: 23206524.3
(22) Date of filing: 27.10.2023
(51) Int. Cl.: G06N 20/20, G06F 21/57

(54) **A METHOD FOR ASSESSING ROBUSTNESS AND RESILIENCE OF MACHINE LEARNING MODELS TO MODEL EXTRACTION ATTACKS ON AI-BASED SYSTEMS**

(30) Priority: 31.10.2022 IL 29783422
(71) Applicant: Deutsche Telekom AG, 53113 Bonn (DE)
(72) Inventor: ELOVICI, Yuval, 7986400 Arugot (IL); BRODT, Oleg, 8471621 Beer Sheva (IL); SHABTAI, Asaf, 7684200 Hulda (IL); GROLMAN, Edita, 7767501 Ashdod (IL); MIMRAN, David, 6215505 Tel Aviv (IL); KHAVKIN, Michael, 8452439 Beer Sheva (IL)
(74) Representative: Schmidt, Christian

(57) **Abstract**

A system for performing an assessment of the robustness and resilience of an examined original ML model against model extraction attacks, comprising a computerized device having at least one processor, which is adapted to train multiple candidate models *M_{C}* with the external dataset *D* for each of the specified candidate learning algorithms *α* in *Alg,* where each candidate substitute model is trained on a subset of *D* corresponding to the evaluated *i^{th}* query limit of the query budget constraint *Q*; evaluate the performance of each substitute model *M_{C}* according to different evaluation methods *∈ Evaluation;* calculate the robustness of each substitute model, where smaller difference or high agreement/similarity rate between the performance of the original model and the substitute model indicates that the original and substitute models are similar to each other, and that the substitute model having the highest performance can mimic the behavior of the original model and can be used as a replica of the original model.

## Description

### Field of Invention

The present invention relates to the field of cyber security. More particularly, the present invention relates to a method for performing assessment of the robustness and resilience of the examined Machine Learning (ML) models to model extraction attacks on Al-based systems.

### Background for the invention

Machine Learning (ML) generates models that are used for decision making and prediction, and are capable of extracting useful patterns and obtaining insights regarding the data through observing the relationships between different attributes in the data.

ML models can be used both for classification and regression tasks. In classification tasks, a ML model receives a vector of feature values and outputs a mapping of this input vector into a categorical label, thereby assigning the input vector to a class. In regression tasks, the ML model uses the input feature vector to predict a continuous numeric value in a specific range. Examples for ML models can be found in many domains, such as a classifier to predict market stock values in the financial domain, or a classifier for recognizing an image object in image processing.

The ML models are often exposed to the public or to users in the owning organization in the form of "ML-as-a-service". Such services provide a "prediction Application Programming Interface (API)" with a "query-response access", in which the user sends a query to the model and receives an output in the form of a prediction or a vector of probability values. This represents the confidence of the model in predicting each possible class label (in machine learning, classification refers to a predictive modeling problem where a class label is predicted for a given example of input data). Such setting is defined as a "black-box" (any artificial intelligence system whose inputs and operations aren't visible to the user or another interested party) setting.

Data scientists induce many ML models in an attempt to solve different Artificial Intelligence (Al) tasks. These tasks often involve extensive and very costly research to achieve the desired performance. The majority of ML methods focus on improving the performance of the created ML models. There are several well-practiced performance measurements for evaluating ML models, such as the accuracy of the learned model, its precision, recall etc. However, these evaluation methods measure the performance of the created models without considering the possible susceptibility of induced ML models to privacy violations, which can be followed by legal consequences.

### Privacy in AI-Based Systems

Data owners, such as organizations, are currently obliged to follow the Data Protection Directive (officially Directive 95/46/EC of the European Union) [1]. First adopted in 1995, this directive regulates the processing of personal data and its movement within the European Union. Recently, the directive has been extended to the General Data Protection Regulation (GDPR), officially enforced on May 2018, presenting increased territorial scope, stricter conditions and broader definitions of sensitive data.

Not only the data itself can reveal private sensitive information, but also the Machine Learning (ML) models that are induced from this data in various Al-based systems. Therefore, model owners are facing a trade-off between the confidentiality of their ML model and providing an appropriate query-response access for users to query the model and receive its outputs. While most of the queries belong to legitimate users, an attacker with this query access and a limited knowledge of the input and output formats of the model can exploit the received outputs for malicious usage, thereby inferring sensitive information that violates the privacy of the entities in the data.

The violation of privacy not only exposes the model owners to legal lawsuits, but also compromises their reputation and integrity. Hence, model owners are advised to take appropriate measures before releasing or deploying any induced ML model in a production environment.

Privacy violations and their legal consequences relate to leakage of sensitive information about the entities (usually user-related data), which might be discovered when using the induced ML model [2] [3]. Therefore, it is required to define measurements for evaluating possible privacy violations aspects in addition to standard performance measurements with respect of the examined ML model [4].

Enhancing the robustness of ML models to privacy violations has a high importance both from the owner's and the user's perspectives. Many companies and service providers try to secure their induced ML model from being replicated or maliciously used by competitors or adversary users. Inducing a good ML model is a challenging task, which incorporates the collection of labeled data, designing the learning algorithm and carrying multiple experiments to validate its effectiveness. All these actions require many financial resources which model owners are obliged to invest.

The induced ML model can be susceptible to an extraction attack [5] [6] [7], where an attacker with a limited query-response access to the induced model can create a substitute model that mimics the performance of the original model and use it for his own purposes as a replica. Several implications are followed by this kind of attack. First, the attacker can damage the reputation of the attacked model owner. Second, by replicating the original model product, the attacker causes the model owner to lose his business advantage, possibly inflicting serious financial losses. Third, the attacker can infer sensitive information about the data subjects from using the replicated model, while causing violation of the General Data Protection Regulation (GDPR) [1]. Also, the replicated model can give the attacker the ability to carry additional privacy violating attacks in other domains [8].

In a model extraction attack, an attacker constructs a substitute model with predictive performance on validation data that is similar to the original ML model. The attacker attempts to mimic the performance of the original ML model by examining and learning the behavior of the original model.

Most of security and privacy attacks on ML models are carried in a white-box (a white box machine learning model allows humans to easily interpret how it was able to produce its output and draw its conclusions, thereby giving us insight into the algorithm's inner workings) setting, in which the adversary has complete access to the model including its structure and meta-parameters. A more challenging setting is a gray-box setting, in which the adversary has partial information regarding the induced ML model. Black-box attacks, in which the adversary has only access to the output of the model given the input record, are less common and considered more sophisticated.

It is therefore an object of the present invention to provide a method for performing an assessment of the robustness and resilience of an examined ML model to model extraction attacks.

It is another object of the present invention to provide a method for performing an assessment of the robustness and resilience of an examined ML model to a full black-box attack.

Other objects and advantages of the invention will become apparent as the description proceeds.

### Summary of the Invention

A method for performing an assessment of the robustness and resilience of an examined original ML model against model extraction attacks, comprising:
a) Training, by a computerized device having at least one processor, multiple candidate models *M_{C}* with the external dataset *D* for each of the specified candidate learning algorithms *α* in *Alg,* where each candidate substitute model is trained on a subset of *D* corresponding to the evaluated *i^{th}* query limit of the query budget constraint Q;
b) Evaluating, by the computerized device, the performance of each substitute model *M_{C}* according to different evaluation methods *∈ Evaluation;* and
c) Calculating, by the computerized device, the robustness of each substitute model, where smaller difference or high agreement/similarity rate between the performance of the original model and the substitute model indicates that the original and substitute models are similar to each other, and that the substitute model having the highest performance can mimic the behavior of the original model and can be used as a replica of the original model.

The robustness of the original model may correspond to the candidate substitute model having the closest performance to that of the original target model or to the candidate substitute model having the smallest difference with respect to the tested evaluation metrics.

Whenever a query limit L is provided, the final returned robustness may be the one that corresponds to L, otherwise the returned robustness is the one that of the best candidate model.

In one aspect, the algorithm receives as the input:
a) an access to the original targeted ML model *M_{Original}* being mimicked during the extraction attack);
b) an external dataset D; and
c) a list of learning algorithms *A*lg used to train the substitute models during the attack.

The algorithm may further receive the query budget Q of an attacker, according to which the attacker will be able to query the original model and receive its prediction vector.

The method may further comprise the step of calculating the robustness of the original target model to extraction attacks under a query constraint L.

The query constraint L may be smaller than that provided by the query budget.

The external dataset D may be taken from the same distribution as the original test set.

An evaluation method may be to calculate the performance gap and setting weights, to calculate a weighted average.

A system for performing an assessment of the robustness and resilience of an examined original ML model against model extraction attacks, comprising a computerized device having at least one processor, which is adapted to:
a) train multiple candidate models *M_{C}* with the external dataset *D* for each of the specified candidate learning algorithms *α* in *Alg,* where each candidate substitute model is trained on a subset of *D* corresponding to the evaluated *i^{th}* query limit of the query budget constraint Q;
b) evaluate the performance of each substitute model *M_{C}* according to different evaluation methods *∈ Evaluation;* and
c) calculate the robustness of each substitute model, where smaller difference or high agreement/similarity rate between the performance of the original model and the substitute model indicates that the original and substitute models are similar to each other, and that the substitute model having the highest performance can mimic the behavior of the original model and can be used as a replica of the original model.

### Brief Description of the Drawings

- Fig. 1 shows a schematic model extraction attack; and
- Fig. 2 shows a pseudo-code for measuring the resilience of the ML model to model extraction attacks, according to an embodiment of the invention.

### Detailed Description of the invention

The present invention provides a method for performing an assessment of the robustness and resilience of an examined ML model to model extraction attacks. At the first stage, the method, implemented by by a computerized device with at least one processor, examines the feasibility of an extraction attack by inducing multiple candidate substitute models. At the second stage, the most matching substitute model to the original model is selected, according to different evaluation metrics.

The original model is referred to as either the attacked model, the original model, the target model, the base model or the original target model. The model which is built by the attacker (an adversary) to mimic the original model will be referred to as either the substitute model, the mimicked model or the stolen model.

The present invention simulates a realistic scenario due to the fact that a practical "black-box" scenario is considered, where the attacker does not have any knowledge of the target model and its internal parameters and configurations (except for the shape and format of its input and output). It is assumed that the attacker does not have access to the training data, which is used to induce the original ML model. It is also assumed that the attacker has a "query-budget" - the maximum allowed number of queries that he can send to the original ML model and receive its responses. This assumption is enhanced by the policy of the original model owner, by often charging a fee per each sent query. In addition, although the querying entity is charged for its queries, most companies might restrict the number of queries to all the users (including the attacker). This constraint affects the success of the extraction attack and the performance of the generated substitute model. It is also assumed that the attacker receives output from the ML model in the form of a prediction vector, including the confidence probability for each possible class label. The attacker can also receive the final predicted class label (but that is often unnecessary since he can choose the class label with the highest probability in the prediction vector).

In a testing environment, the adversary is referred to as an "attacker" (but a real attacker does not exist). The present invention performs an assessment of the possibility of the original ML model to be attacked by an adversary (an "attacker") in a model extraction attack. This is done by examining the possibility of an adversary to carry out a successful attack.

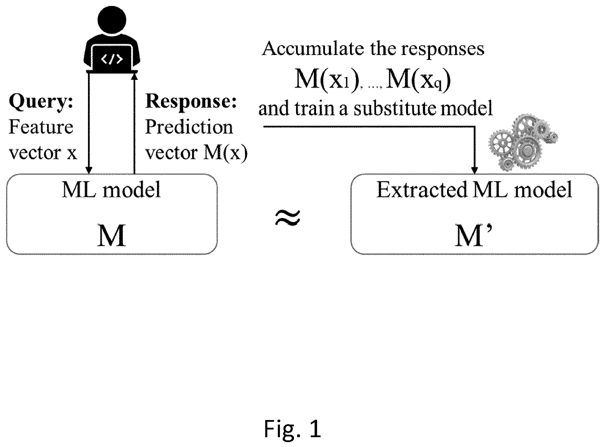

Fig. 1 shows a schematic description of the model extraction attack. Generally, an attack consists of several phases.

At the first phase performed by a computerized device with at least one processor, a list of candidate substitute algorithms is assembled. These candidate substitute algorithms will be used to induce a ML model which attempts to mimic the performance of the original target model. In addition, the attacker obtains data from an external source, referred to as external data. For the attack to succeed, it is preferable for the distribution of the external data to be similar to the distribution of the original data, which was used to train the original target model. The obtained external data is partially used by a computerized device with at least one processor, for training the model that will be used to attack the original model (the model that will be used to attack the original model is defined as the substitute model) and in the testing environment, for testing and evaluating the performance of the substitute model relatively to that of the original target model

At the second (training) phase performed by a computerized device with at least one processor, each of the candidate ML models is trained and induced according to the substitute learning algorithms, based on the external data. A list of different learning algorithms is used, since it is impossible to know which learning algorithm the attacker will choose when performing a real attack. Therefore, the possibility to perform this attack is examined, based on different candidate learning algorithms.

At the third phase performed by a computerized device with at least one processor, the degree of success of the mimicked model is evaluated by evaluating the performance of each induced substitute model according to different evaluation metrics relatively to the target original model.

At the fourth phase performed by a computerized device with at least one processor, the substitute model which achieves the best performance relatively to the target model is selected to be the mimicked model, i.e., the model with the highest value for the defined performance metric, thereby causing the lowest examined performance gap between the target model and its substitute or the highest agreement/similarity between the target model and its substitute.

At the fifth phase performed by a computerized device with at least one processor, the resilience of the target model is calculated according to the chosen substitute model, and returned to the data scientist.

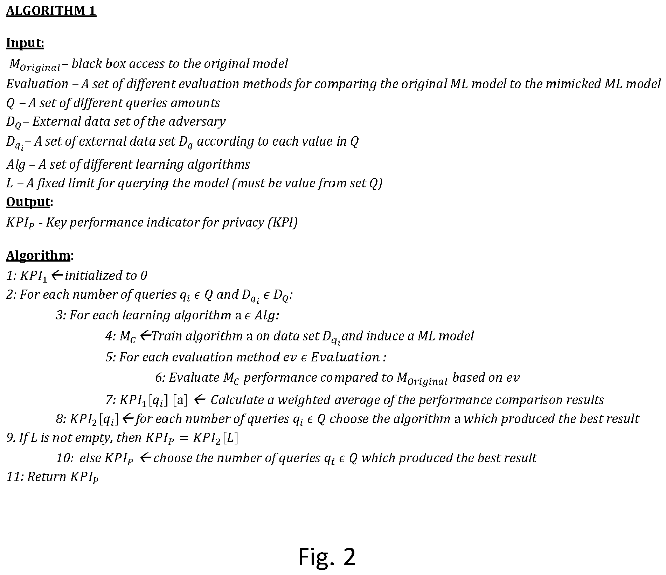

Fig. 2 shows a pseudo-code of the method of the present invention, for measuring the resilience of the ML model, in order to model extraction attacks. The algorithm receives as the input an access to the original targeted ML model *M_{Original}* (that is mimicked during the extraction attack), an external dataset D (preferably, from the same distribution as the original test set), and a list of learning algorithms *Alg* which will be used to train the substitute models during the attack. In terms of the attacker's constrained environment, the algorithm also receives the query budget Q of an attacker, according to which the attacker will be able to query the original model and receive its prediction vector (i.e., the maximal amount of queries that an attacker can send to the original model). As an optional parameter, the testing can also further calculate the robustness of the original target model to extraction attacks under a query constraint L, which can be smaller than that provided by the query budget. The evaluation methods for comparing the original ML model to the mimicked ML model performance can be derived according to different methods suggested in the domain [9]. For example, according to Lee et. al [9], the following evaluation methods might be used:
- Agreement: Model accuracy of the substitute model, treating the original model as ground truth.
- Cosine: The average cosine similarity of output probability vectors of the substitute and the original models.
- Mean Absolute Error (MAE): The average absolute errors of the predictions of the substitute and the original models per class.
- KL-divergence: KL-divergence between the probabilities of the substitute and the original models.
- Accuracy: The prediction accuracy.

In addition, existing evaluation methods may be adjusted or alternatively, new evaluation methods may be added. For example, a new evaluation method is to calculate the performance gap, i.e. the difference in the absolute value between the *F*1 score of the original model to the *F*1 score of the substitute model (or any other measurement gap, such as accuracy gap). In case the tester decides that one method should have more significance than another, the tester can set weights accordingly, and calculate a weighted average.

In the pseudo-code of Fig. 2, the term "best" can be related to the result with respect to either the gap, the robustness or the agreement/similarity rate. From the tester's perspective, a result of an induced candidate substitute model is considered "the best" if one of the following conditions is satisfied:
(1) smallest performance gap between the original model and the substitute model, according to a pre-defined performance metric, such as F1-score, precision, recall or accuracy. This implies that the substitute model successfully mimicked the original model. A comparison criterion for choosing between different substitute learning algorithms and query sizes is the robustness score, which is equal to the calculated performance gap. A successful attack has a small gap and therefore, a low robustness.
(2) highest agreement/similarity rate between the predictions of the original model and the substitute model, according to a pre-defined agreement\similarity metric, such as cosine or KL-divergence. This implies that the substitute model successfully mimicked the original model. A comparison criterion for choosing between different substitute learning algorithms and query sizes is the robustness score which is defined as: 1 - *agreement*/*similarity* (for a metric in the range of [0, 1]). A successful attack achieves a high agreement\similarity and therefore a low robustness.

The final robustness score of the model extraction test is considered as the lowest achieved robustness among all the evaluated candidate model. The minimal robustness score is chosen, since it represents the highest level of vulnerability of the attacked ML model (worst-case scenario).

The algorithm of Fig. 2 consists of the following main phases:
1. In the training phase (lines 2-7 in Fig. 2) performed by a computerized device with at least one processor, a substitute model with the external dataset D for each of the specified candidate learning algorithms *α* in *Alg* is trained. Each candidate substitute model is trained on a subset of *D* corresponding to the evaluated *i^{th}* query limit of the query budget constraint Q, i.e., a random sample of size *qᵢ*. The resulted substitute model is denoted as *M_{C}.*
2. Then, in the testing phase (lines 5-6 in Fig. 2) performed by a computerized device with at least one processor, the performance of each substitute model *M_{C}* is evaluated according to different evaluation methods *∈ Evaluation* .
3. Finally, in the calculation phase (lines 7-11 in Fig. 2), the robustness of each substitute model *M_{c}* is calculated. A smaller difference (i.e., a gap) or high agreement/similarity rate between the performance of the original model and the substitute model implies that the original and substitute models are similar to each other, and that the substitute model can mimic the behavior of the original model and be used as a replica (i.e., instead of the original model). Since multiple candidate models are examined, the robustness of the original model is considered with respect to the "best" candidate, i.e., the candidate substitute model with the closest performance to that of the original target model, or the smallest difference with respect to the tested evaluation metrics. In case a query limit L is provided (line 9 in Fig. 2), the final returned robustness is the one that corresponds to L, otherwise the returned robustness is the one that of the best candidate model.

As various embodiments and examples have been described and illustrated, it should be understood that variations will be apparent to one skilled in the art without departing from the principles herein. Accordingly, the invention is not to be limited to the specific embodiments described and illustrated in the drawings.

### References

[1] E. Commision, "EU data protection rules," European Commision, 2018. [Online]. Available: https://ec.europa.eu/commission/priorities/justice-and-fundamental-rights/data-protection/2018-reform-eu-data-protection-rules/eu-data-protection-rules_en.
[2] M. Barreno, B. Nelson, A. D. Joseph and J. D. Tygar, "The security of machine learning.," Machine Learning, vol. 8, no. 12, pp. 121-148, 2010.
[3] M. Al-Rubaie and M. J. Chang, "Privacy Preserving Machine Learning: Threats and Solutions," IEEE Security & Privacy, vol. 17, no. 2, pp. 49--58, 2019.
[4] S. L. Pfleeger and P. C. P., "Analyzing Computer Security: A Threat/Vulnerability/Countermeasure Approach," Prentice Hall Professional, 2012.
[5] F. Tramèr, F. Zhang, A. Juels, M. K. Reiter and T. Ristenpart, "Stealing machine learning models via prediction APIs," 25th {USENIX} Security Symposium ({USENIX} Security 16), pp. 601-618, 2016.
[6] M. Juuti, S. Szyller, S. Marchal and N. Asokan, "PRADA: protecting against DNN model stealing attacks," in 2019 IEEE European Symposium on Security and Privacy, 2019.
[7] M. Jagielski, N. Carlini, D. Berthelot, A. Kurakin and N. Papernot, "High Accuracy and High Fidelity Extraction of Neural Networks," in 29th USENIXSecurity Symposium (USENIX Security 2020), 2020.
[8] "Applications in Security and Evasions in Machine Learning: A Survey," Electronics, vol. 9, no. 1, pp. 97--140, 2020.
[9] T. Lee, B. Edwards, I. Molloy and D. Su, "Defending against machine learning model stealing attacks using deceptive perturbations," in arXiv:1806.00054 [cs.LG], 31 May, 2018.

## Claims

1. A method for performing an assessment of the robustness and resilience of an examined original ML model against model extraction attacks, comprising:
a) training, by a computerized device having at least one processor, multiple candidate models *M_{C}* with the external dataset *D* for each of the specified candidate learning algorithms *α* in *Alg,* where each candidate substitute model is trained on a subset of *D* corresponding to the evaluated *i^{th}* query limit of the query budget constraint Q;
b) Evaluating, by said computerized device, the performance of each substitute model *M_{C}* according to different evaluation methods *∈ Evaluation;* and
c) Calculating, by said computerized device, the robustness of each substitute model, where smaller difference or high agreement/similarity rate between the performance of the original model and the substitute model indicates that the original and substitute models are similar to each other, and that the substitute model having the highest performance can mimic the behavior of the original model and can be used as a replica of said original model.

2. A method according to claim 1, wherein the robustness of the original model corresponds to the candidate substitute model having the closest performance to that of the original target model.

3. A method according to claim 1, wherein the robustness of the original model corresponds to the candidate substitute model having the smallest difference with respect to the tested evaluation metrics.

4. A method according to claim 1, wherein whenever a query limit L is provided, the final returned robustness is the one that corresponds to L, otherwise the returned robustness is the one that of the best candidate model.

5. A method according to claim 1, wherein the algorithm receives as the input:
a) an access to the original targeted ML model *M_{Original}* being mimicked during the extraction attack);
b) an external dataset D; and
c) a list of learning algorithms *A*lg used to train the substitute models during the attack.

6. A method according to claim 4, wherein the algorithm also further receives the query budget Q of an attacker, according to which the attacker will be able to query the original model and receive its prediction vector.

7. A method according to claim 1, further comprising calculating the robustness of the original target model to extraction attacks under a query constraint L.

8. A method according to claim 6, wherein the query constraint L is smaller than that provided by the query budget.

9. A method according to claim 6, wherein the external dataset D is taken from the same distribution as the original test set.

10. A method according to claim 1, wherein an evaluation method is to calculate the performance gap and setting weights, to calculate a weighted average.

11. A system for performing an assessment of the robustness and resilience of an examined original ML model against model extraction attacks, comprising a computerized device having at least one processor, which is adapted to:
d) train multiple candidate models *M_{C}* with the external dataset *D* for each of the specified candidate learning algorithms *α* in *Alg,* where each candidate substitute model is trained on a subset of *D* corresponding to the evaluated *i^{th}* query limit of the query budget constraint Q;
e) evaluate the performance of each substitute model *M_{C}* according to different evaluation methods *∈ Evaluation;* and
f) calculate the robustness of each substitute model, where smaller difference or high agreement/similarity rate between the performance of the original model and the substitute model indicates that the original and substitute models are similar to each other, and that the substitute model having the highest performance can mimic the behavior of the original model and can be used as a replica of said original model.
